Europäisches Patentamt

European Patent Office

Office européen des brevets

(19)

(11)  **EP 0 536 685 B1**

(12)  ## EUROPÄISCHE PATENTSCHRIFT

(45)  Veröffentlichungstag und Bekanntmachung des
Hinweises auf die Patenterteilung:
**09.07.1997 Patentblatt 1997/28**

(51) Int. Cl.$^6$: **B26D 5/00**, B41F 17/02,
B23K 26/02

(21)  Anmeldenummer: **92117018.9**

(22)  Anmeldetag: **06.10.1992**

(54)  **Vorrichtung zur Herstellung von materialangepasst perforierten Endlosformularen**

Apparatus for material adapted perforating of multi-part business forms

Dispositif pour perforer, en relation avec la qualité du matériel, des bandes de formulaires

(84)  Benannte Vertragsstaaten:
**AT BE CH DE DK ES FR GB IT LI NL SE**

(30)  Priorität: **08.10.1991 DE 4133312**

(43)  Veröffentlichungstag der Anmeldung:
**14.04.1993 Patentblatt 1993/15**

(73)  Patentinhaber: **ZWECKFORM Büro-Produkte
GmbH
D-83626 Valley (DE)**

(72)  Erfinder: **Zschaek, Michael
W-8000 München 70 (DE)**

(74)  Vertreter: **Zangs, Rainer E., Dipl.-Ing. et al
Hoffmann, Eitle & Partner
Postfach 81 04 20
81904 München (DE)**

(56)  Entgegenhaltungen:
**US-A- 4 947 685        US-A- 5 028 040**

## Beschreibung

Die Erfindung betrifft Endlosformulare mit zumindest Querperforationen mit zumindest Querperforationen sowie eine Vorrichtung und ein Verfahren zu deren Herstellung.

Endlosformulare für EDV-Ausdrucke sind quer- und längsperforiert, um einerseits eine Faltung der Papierbahn für die Ablage der Formulare in einem Stapel und andererseits eine Trennung der einzelnen Formulare voneinander und von überflüssigen Formularbestandteilen, z.B. Transportändern zu ermöglichen. An die Perforationen werden daher zwei grundsätzlich entgegengesetzte Anforderungen gestellt. Denn zum einen ist für die Bearbeitung der Formulare in einem kontinuierlichen Prozeß ein abrißfreier Lauf durch die Bearbeitungsanlagen, z.B. einen Drucker zu gewährleisten; zum anderen darf aber eine zuverlässige, teilweise auch automatisch erfolgende Trennung der Formulare nicht unnötig erschwert oder gar unmöglich gemacht wrid. Der Widerstand, den die Perforation dem Einreißen bzw. dem Weiterreißen entgegensetzt, d.h. die Festigkeit der Perforation - im folgenden Perforationsfestigkeit - darf angesichts dessen nur in möglichst engen Grenzen schwanken.

Die Perforation, insbesondere die Querperforation einer Papierbahn werden bislang bei der Herstellung mit Hilfe von Messerwalzen in das Papier eingebracht. Dabei sind auf einer Messerwalze eine oder mehrere Messerreihen so angeordnet, daß von den Messern auf der rotierenden Messerwalze das Papier in regelmäßigen Abständen durchschnitten und so die Perforation eingebracht wird.

Bei Endlosformularen basiert die Perforationsfestigkeit, die beim Einbringen einer Perforation in eine Papierbahn erzielt wird, auf den Papiereigenschaften bzw. der Papierbeschaffenheit und auf der Qualität der Perforation selbst, d.h. letztlich auf der Qualität der Perforationsvorrichtung. In Bezug auf die herkömmliche Perforationsvorrichtung kommt der Güte und dem Abnutzungsgrad der Perforationsmesser und der Präzision der Einstellung der Messerwalze eine entscheidende Bedeutung zu. Bei den Papiereigenschaften ist insbesondere die Längsbruchlast als ausschlaggebende Größe zu nennen, die auf die erzielte Perforationsfestigkeit einen entscheidenden Einfluß ausübt. Schwankungen in diesen Bereichen führen unweigerlich zu einer Schwankung der Perforationsfestigkeit.

Die Bruchkraft von Papier kann nach bekannten Meßmethoden, etwa nach DIN 53112 ermittelt werden. Für die nicht zerstörungsfreie nicht zerstärungsfreie Messung der Perforationsfestigkeit kann ein Perforationsmeßgerät nach dem System FOGRA (Deutsche Forschungsgesellschaft für Druck- und Reproduktionstechniken e.V.) verwendet werden.

In diesem Zusammenhang ist festzustellen, daß ausgehend von einer durch das Papier vorgegebenen Festigkeit eine Verschlechterung eintritt, wenn die Perforation in das Papier eingebracht wird. Denn für den Variationskoeffizient der Längsbruchlast des verwendeten Papiers werden bei modernen Papierqualitäten Werte von 3% bis 4% erzielt; diese Werte werden durch das Einbringen der Perforation auf über 15% verschlechtert. Das bedeutet, daß die Schwankungen um einen gewünschten Wert fuhr die Perforationsfestigkeit nach dem Einbringen der Perforation erheblich größer sind, als dies durch die Schwankungen der Papiereigenschaften tatsächlich erforderlich wäre. Mit anderen Worten werden Fortschritte, die bei der Herstellung von Papier im Hinblick auf eine Vergleichmäßigung der Eigenschaften und einen Abbau von Schwankungen der Beschaffenheit in den letzten Jahren erreicht wurden, bei den bisher bekannten Verfahren und Vorrichtungen zur Einbringung der Perforation im wesentlichen zunichte gemacht.

Die Hersteller von Maschinen für die Verarbeitung von Endlosformularen, einschließlich der Nachverarbeitungsmaschinen geben Wertebereiche für die Perforationsfestigkeit an, die zweckmäßigerweise vom Benutzer einzuhalten sind, um einen optimalen Durchlauf durch die Maschine und eine gute Ablage der Endlosformulare im Stapler sicherzustellen. Ein Unterschreiten des unteren Grenzwertes kann zu Papierabrissen während der Verarbeitung führen; bei einem Überschreiten des oberen Grenzwertes können Ablageschwierigkeiten oder Versagen beim Trennen der Formulare auftreten. Angesichts der oben erwähnten Schwankungen und der Probleme bei der Herstellung sind die Wertebereiche in den meisten Fällen sehr breit und erlauben Abweichungen von bis zu $\pm$ 20% von einem mittleren Wert. Engere Toleranzen hinsichtlich der Perforationsfestigkeit sind aber wünschenswert, da auf diese Weise höhere Verarbeitungsgeschwindigkeiten und qualitativ bessere Produkte mit entsprechend konstruierten Verarbeitungsmaschinen wie etwa Hochleistungsdruckern möglich wären bzw. die Fehlerquote aufgrund von Papierabrissen oder Ablagefehlern bei herkömmlichen Anlagen zu senken wäre.

Der Erfindung liegt daher die Aufgabe zugrunde, eine Vorrichtung zur Herstellung von neuartigen Endlosformularen zu schaffen, die im Hinblick auf Einsetzbarkeit in Verarbeitungsmaschinen für Endlosformulare besonders günstige Eigenschaften aufweisen und insbesondere eine verbesserte Perforationsfestigkeit besitzen.

Gelöst wird die zuvor genannte Aufgabe durch die Schaffung einer Vorrichtung zur Herstellung von Endlosformularen mit den merkmalen des Patentanspruchs 1. Vorteilhafte Ausgestaltungen ergeben sich aus den Unteransprüchen.

Die Erfindung beruht auf der Erkenntnis, daß bei gleichen Papieren ein Faserbruch im wesentlichen immer nach der gleichen Dehnungsstrecke einsetzt; das bedeutet, daß sich gleichausgestattete Papiere hinsichtlich der Grenzen ihrer irreversiblen Verformung im wesentlichen gleich verhalten. Unter gleichausgestatteten Papieren werden solche verstanden, die gleiches Flächengewicht und gleiche Ausstattung bei der Herstellung bezüglich Leimung, Fasergröße, Faserorientierung und Feststoffgehalt aufweisen.

Im folgenden wird die Erfindung unter Bezugnahme auf die Zeichnungen genauer beschrieben, in denen zeigt:

Fig. 1 eine Meßvorrichtung für die Herstellung materialangepaßt perforierter Endformulare gem. der Erfindung,

Fig. 2A, 2B, 2C verschiedene Perforationsspalte und die korrespondierenden Detektorsignale,

Fig. 3 eine Vorrichtung zur Herstellung von materialangepaßt perforierten Endlosformularen,

Fig. 4 eine Laservorrichtung zur Herstellung von materialangepaßt perforierten Endlosformularen,

Fig. 5A, 5B eine Darstellung zur Verdeutlichung der Anforderungen an den Verlauf eines Laserstrahls zur Herstellung von materialangepaßt perforierten Endlosformularen,

Fig. 6 eine bevorzugte Laserstrahl-Führungsvorrichtung für die Herstellung von materialangepaßt perforierten Endlosformularen,

Fig. 7A, 7B eine schematische Darstellung zur Verdeutlichung der Bewegungsabläufe bei der Vorrichtung gem. Fig. 6,

Fig. 8 eine geschnittene Darstellung einer besonderen Ausgestaltung der Laserstrahl-Führungsvorrichtung,

Fig. 9 eine geschnittene Darstellung einer weiteren Ausgestaltung der Laserstrahl-Führungsvorrichtung, und

Fig. 10A, 10B, 10C eine schematische Darstellung der Bewegungsabläufe bei der Ausführung gem. Fig. 9.

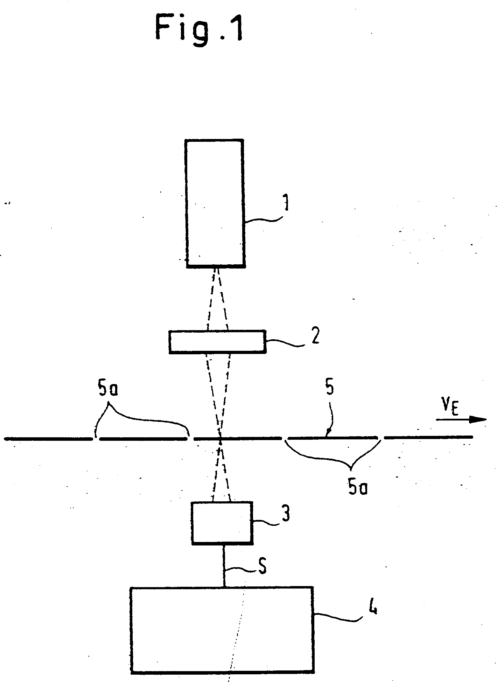

Im folgenden wird zunächst anhand von Fig. 1 eine Meßvorrichtung beschrieben, mit der die Qualität der Perforation erfaßt und die erzielte Perforationsfestigkeit bestimmt wird. Die Meßvorrichtung stellt einen wesentlichen Bestandteil einer erfindungsgemäßen Vorrichtung zur Herstellung von materialangepaßt perforierten Endlosformularen dar; über die Meßvorrichtung erfolgt die Einbeziehung der Eigenschaften des Papiers in den Herstellungsprozeß.

Die Meßvorrichtung umfaßt eine Lichtquelle 1, vorzugsweise eine niederenergetische Laserlichtquelle, z.B. Laserdioden mit 3 bis 5 mW Leistung, eine optische Einrichtung 2 zur Bündelung des von der Lichtquelle ausgehenden Lichts, eine Detektoreinrichtung 3 zur Aufnahme des Lichts und zur Abgabe eines Detektorsignals S und eine Auswerteeinrichtung 4 zur Auswertung des Detektorsignals. In Fig. 1 sind ferner Endlosformulare 5 mit Perforationsspalten 5a in einer Ansicht quer zur Laufrichtung (Pfeil) der Endlosformulare dargestellt. Die optische Einrichtung 2 bündelt das Licht von der Lichtquelle 1 derart, daß in der Ebene der Endlosformulare der Lichtfleck mit dem kleinsten Durchmesser erzeugt wird. Vorzugsweise verläuft das Licht senkrecht zur Ebene der Endlosformulare.

Das Licht durchdringt die Endlosformulare 5 nicht oder vorzugsweise nur so geringfügig, daß es beim Erreichen der Detektoreinrichtung 3 nur ein geringes Detektorsignal S hervorruft, das als Grundsignal genutzt werden kann; bleibt dieses Grundsignal aus, kann auf einfache Weise ein Fehler in der Meßvorrichtung erkannt werden.

Werden die Endlosformulare 5 in Richtung des Pfeils $V_E$ in Fig. 1 bewegt, tritt das Licht an den Stellen der Perforationsspalte 5a durch die Endlosformulare hindurch, gelangt zur Detektoreinrichtung 3 und ruft ein charakteristisches Detektorsignal S hervor, das an die Auswerteeinrichtung 4 weitergeleitet wird. Die Größe und Art des Detektorsignals wird von der Auswerteeinrichtung 4 zur Überprüfung der Perforationsspalte 5a und damit zur Bestimmung der Perforationsfestigkeit ausgewertet. Das Detektorsignal S besitzt die im folgenden beschriebene Abhängigkeit von den Perforationsspalten 5a, die mit Hilfe vergleichender Versuche auf der Grundlage von mikroskopischen Beurteilungen und Perforationsfestigkeitsmessungen - unter Zerstörung der Perforation - ermittelt wurde.

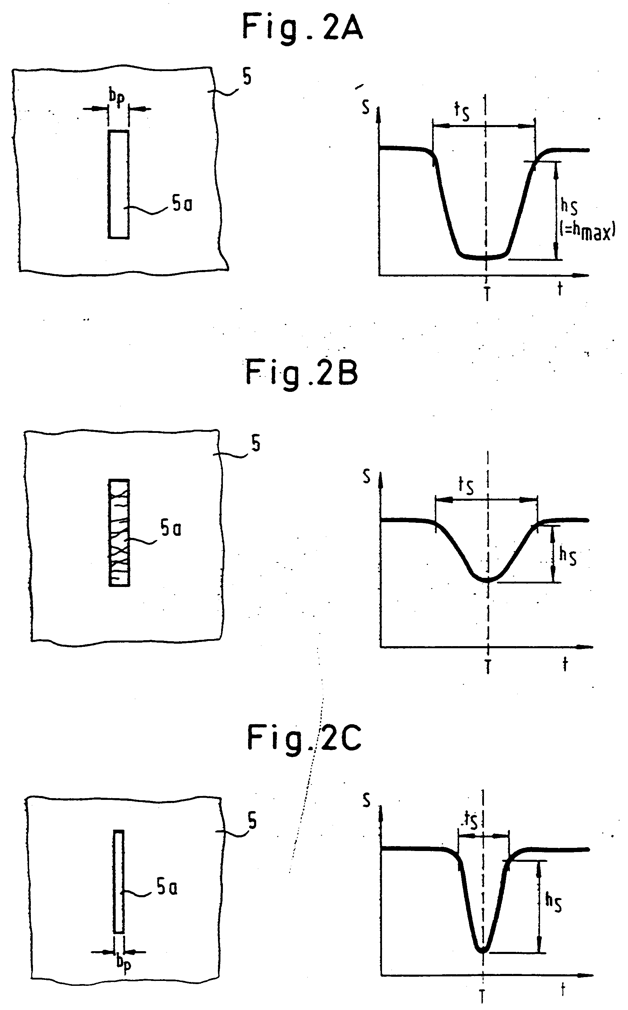

In den Fig. 2A bis 2C sind zur Erläuterung dieser Abhängigkeit des Detektorsignals beispielhafte Perforationsspalte 5a in Endlosformularen 5 in vergrößerter Darstellung, sowie in S/t-Diagrammen die entsprechenden Detektorsignale S gezeigt, die von dem durch die Perforationsspalte hindurchtretenden Licht hervorgerufen werden. Nach Einbringen des Perforationsschnittes bildet sich aufgrund der bei der Bearbeitung der Papierbahn vorhandenen Spannung ein Perforationsspalt mit einer bestimmten Perforationsspaltbreite aus, die von den Papiereigenschaften, der vorhandenen Papierbahnspannung und dem Schnitt/Steg-Verhältnis der Perforation abhängt. Die Perforationsfestigkeit korreliert zur Breite des Perforationsspaltes, denn die Breite zeigt an, wie weit das Papier unter der aufgebrachten Belastung von der Bruchgrenze entfernt ist. Denn durch die Einbringung der Perforation findet eine Schwächung des tragenden Papierquerschnittes statt, so daß die Papierbahnspannung zu einer Dehnung des Papiers in den tragenden Stegen der Perforation führt. Das bedeutet, daß die Breite der Perforationsspalte anzeigt, wieviel Kraft noch aufgenommen werden muß, um das Papier zu reißen, so daß ausgehend von der bekannten Bahnspannung die Kraft bestimmt werden kann, die zum Zerreißen der Perforation letztlich noch erforderlich ist. Das bedeutet aber, daß die Perforationsfestigkeit auf der Grundlage der Breite der Perforationsspalte ermittelt werden kann. Auf diese Weise werden die Papiereigenschaften in die Messung und die Beurteilung der Perforationsfestigkeit einbezogen.

In Fig. 2A ist ein erster Perforationsspalt 5a dargestellt; anhand des S/t-Diagramms in Fig. 2A wird das durch diesen Perforationsspalt erzeugte Detektorsignal S erläutert. Der Perforationsspalt 5a besitzt eine Breite $b_P$ und korreliert bei einer vorgegebenen Papierqualität und einem vorgegebenen Schnitt/Steg-Verhältnis der Perforation zu einer bestimmten Perforationsfestigkeit. Bei dem Perforationsspalt 5a sind im Inneren keine Papierfasern mehr vorhanden, die die beiden Längsseiten des Perforationsspaltes mit einander verbinden oder in den Perforationsspalt hineinstehen, da beim Einbringen der Perforation das Papier sauber durchtrennt wurde. Die Bruchkraft des Papiers und das Schnitt/Steg-Verhältnis der Perforation bestimmen bei einem derart eingebrachten Peforationsspalt die Perforationfestigkeit.

Gelangt der Perforationsspalt 5a gem. Fig. 2A in den Bereich des Lichtweges der Meßvorrichtung gem. Fig. 1, tritt das Licht durch die Ebene der Papierbahn hindurch und erreicht die Detektoreinrichtung 3. Aufgrund des auftreffenden Lichts erzeugt die Detektoreinrichtung 3 ein Detektorsignal S, dessen Verlauf über der Zeit in dem S/t-Diagramm in Fig. 2A dargetellt ist. Das Detektorsignal S wird im wesentlichen durch die beiden Größen $t_S$ und $h_S$, d.h. die Signaldauer und den Signalhub charakterisiert.

Die Signaldauer $t_S$ richtet sich nach der Breite $b_P$ des Perforationsspaltes 5a und der Geschwindigkeit $V_E$, mit der die Endlosformulare 5 in der Richtung des Pfeiles in Fig. 1 bewegt werden. Da die Bewegungsgeschwindgkeit $V_E$ der Endlosformulare bei der Herstellung bekannt ist oder aber zumindest auf einfache Weise mit Hilfe einer geeigneten Meßeinrichtung zu erfassen ist, kann die Signaldauer $t_S$ zur Ermittlung der Breite $b_P$ des Perforationsspaltes 5a herangezogen werden. Denn die Breite $b_P$ des in die Papierbahn eingebrachten Perforationsspaltes 5a wird über die Beziehung $b_P = t_S \times V_E$ bestimmt. Die Breite $b_P$ korreliert mit der Perforationsfestigkeit, ausgehend von einer gleichbleibenden Bahnspannung der Endlosformulare. Bei den vergleichenden Untersuchungen wurde aber festgestellt, daß Änderungen der Papiereigenschaften in den Punkten Faserlänge, Faserorientierung und Flächengewicht keinen Einfluß auf diesen Zusammenhang zwischen der Breite $b_P$ und der Perforationsfestigkeit haben. Die Breite $b_P$ zeigt daher an, wie weit das Papier unter der aufgebrachten Belastung von der Bruchgrenze entfernt ist, mit anderen Worten, wieviel Kraft noch aufgenommen werden muß, um das Papier zu reißen.

Der Signalhub $h_S$ erlaubt eine Aussage über die Güte des Perforationsspaltes, da nur für den Fall, daß sämtliche Papierfasern im Bereich des Schnittes durchtrennt wurden, der in Fig. 2A gezeigte maximale Signalhub $h_S = h_{max}$ erreicht wird. Je mehr Fasern in den Perforationsspalt hineinstehen, umso geringer ist der Signalhub $h_S$ des Detektorsignals. Der Signalhub $h_S$ führt daher zu einer eindeutigen Aussage über die Güte des Schnittes, mit dem die Perforation in das Papier eingebracht wurde, bzw. über die Perforation selbst.

Der maximale Signalhub $h_{max}$ hängt grundsätzlich aber auch davon ab, ob der Lichtfleck in der Ebene der Endlosformulare 5 eine Größe besitzt, die es gestattet, daß die gesamte Lichtmenge durch den Perforationsspalt 5a der Breite $b_P$ hindurchtritt, ohne daß ein Teil des Lichts von den Längsseiten des Perforationsspalts abgeschattet wird. Die gesamte Lichtmenge kann nur durch den Perforationsspalt 5a hindurchtreten, wenn der Durchmesser des in der Ebene der Endlosformulare 5 (vgl. Fig. 1) fokussierten Lichtflecks kleiner ist als die Breite $b_P$ des Perforationsspalts, da anderenfalls der Lichtfleck bei seiner Bewegung über den Perforationsspalt von den Längskanten des Perforationsspalts stets teilweise abgedeckt wird, ohne jemals ganz innerhalb des Spalts zu liegen. Daher ist vorzugsweise sowohl die Lichtquelle als auch die optische Einrichtung so auszugestalten, daß ein möglichst kleiner, exakt fokussierter Lichtfleck in der Ebene der Endlosformulare erzielt wird.

In Fig. 2B ist ein zweiter Perforationsspalt 5a im Endlosformular 5 dargestellt bei dem nicht alle Papierfasern während des Einbringens der Perforation in die Papierbahn im Bereich des Perforationsspalts 5a durchtrennt wurden. Die Breite $b_P$ entspricht aber dem vorgegebenen Wert und damit der Breite des Perforationsspalts in Fig. 2A. Hinsichtlich der Signaldauer $t_S$ unterscheidet sich das Detektorsignal S, das durch den Perforationsspalt gem. Fig. 2B hervorgerufen wird, nicht von dem des Perforationsspalts gem. Fig. 2A. Im Gegensatz dazu ist aber der Signalhub $h_S$ im Fall des Perforationsspalts gem. Fig. 2B deutlich geringer, was auf die das Hindurchtreten des Lichts behindernde Wirkung der stehengebliebenen Papierfasern im Perforationsspalt 5a zurückgeht. Somit kann eine mangelhafte Durchtrennung und Beseitigung der Papierfasern im Perforationsspalt 5a über den Signalhub $h_S$ erfaßt werden.

In Fig. 2C ist schließlich ein dritter Perforationsspalt 5a gezeigt, bei dem zwar keine Papierfasern mehr im Inneren vorhanden sind, da alle Fasern durchgetrennt wurden, bei dem aber die Breite $b_P$ deutlich kleiner ist als bei den Perforationsspalten gem. Fig. 2A oder 2B. Die kleinere Breite $b_P$ des dritten Perforationsspalts 5a zeigt an, daß sich das Papier unter der aufgebrachten Bahnspannung nicht so stark gedehnt hat, wie in den Fällen, die in Fig. 2A und 2B dargestellt sind. Das bedeutet aber gleichzeitig, daß die Kraft, die noch aufzubringen ist, um das Papier an der Perforation zu zerreißen, im Fall von Fig. 2C größer ist als in den beiden anderen Fällen. Mit anderen Worten ist die Perforationsfestigkeit bei einer Perforation gem. Fig. 2C größer. Die Signaldauer $t_S$ des Detektorsignals, das von dem Perforationsspalt 5a gem. Fig. 2C hervorgerufen wird, verkürzt sich dementsprechend im Vergleich mit den Detektorsignalen gem. Fig. 2A oder 2B. Der Signalhub $h_S$ bleibt aber unverändert groß, da keine Papierfasern im Inneren des Perforationsspalts 5a stehengeblieben sind.

Das Detektorsignal S wird der Auswerteeinrichtung 4 zugeführt, die die beiden charakteristischen Größen $t_S$ und $h_S$ aus dem Verlauf des Detektorsignals bestimmt und die Perforationsfestigkeit bzw. eine dazu korrespondierende Größe bestimmt. Dazu werden Vorgaben für die Signaldauer $t_{Ssoll}$ bzw. die Breite $b_{Psoll}$ des Perforationsspalts und für den Signalhub $h_{Ssoll}$ gemacht, die einer bestimmten, vorgegebenen Perforationsfestigkeit entsprechen. Diese Vorgaben können für verschiedene Papiersorten mit Hilfe der bekannten Möglichkeiten und Methoden und für die Meßvorrichtung durch geeignete Kalibrierung in Bezug auf den maximalen Signalhub $h_{max}$ in Form einfacher Versuchsreihen bestimmt werden und stehen anschließend etwa in Form einer Tabelle zur Verfügung. Die Auswerteeinrichtung 4 führt im wesentlichen einen Vergleich der jeweils erfaßten Werte $t_S$ und $h_S$ mit diesen Vorgaben durch und bestimmt die momentane Perforationsfestigkeit PF oder die dazu korrespondierende Größe als Funktion der beiden momentanen Werte $t_S$ und $h_S$ ( PF $=f(t_S, h_S)$ ) bzw. der beiden momentanen Werte $b_P$ und $h_S$ ( PF$=f(b_P, h_S)$ ) unter Anwendung der im folgenden beschriebenen Grundsätze.

Ist die momentane Signaldauer $t_S$ größer als die Vorgabe $t_{Ssoll}$ ($t_S > t_{Ssoll}$), dann ist die Perforationsfestigkeit PF kleiner als der vorgegebene Wert. Denn die vorhandene Bahnspannung dehnt die Perforation stärker als durch den Sollwert vorgegeben. Eine Verkleinerung des Schnitt/Steg-Verhältnisses kann hier Abhilfe schaffen.

Ist die momentane Signaldauer $t_S$ kleiner als die Vorgabe $t_{Ssoll}$ ($t_S < t_{Ssoll}$), so ist die Perforationsfestigkeit PF der Perforation größer als der vorgegebene Wert. Dies bedeutet, daß das Papier der Bahnspannung einen größeren Widerstand entgegensetzt und nicht so weit gedehnt wird, wie durch den Sollwert vorgegeben ist. Über eine Vergrößerung des Schnitt/Steg-Verhältnisses kann die Perforationsfestigkeit angepaßt werden.

Die Vergleiche sollten vorteilhaft mit Hilfe des Wertes der Breite $b_P$ und der Vorgabe $b_{Psoll}$ durchgeführt werden, wenn von einer konstanten Bewegungsgeschwindigkeit $V_E$ der Endlosforumulare nicht ausgegangen werden kann. Der Auswerteeinrichtung 4 wird dann neben dem Detektorsignal S ein der Bewegungsgeschwindigkeit $V_E$ der Endlosformulare 5 entsprechedes Meßsignal zugeführt, das von einer geeigneten Meßeinrichtung abgegeben wird. Die Auswerteeinrichtung 4 bestimmt dann den Wert $b_P$ mit Hilfe der Beziehung $b_P = t_S \times V_E$ .

Ist der momentane Signalhub $h_S$ größer oder gleich der Vorgabe $h_{Ssoll}$ ($h_S > = h_{Ssoll}$) , dann wird die Perforationsfestigkeit nicht durch im Perforationsspalt stehengebliebene Papierfasern beeinflußt. Ist der momentane Signalhub $h_S$ kleiner als die Vorgabe $h_{Ssoll}$ ($h_S < h_{Ssoll}$), dann weist dies auf die Perforationsfestigkeit beeinflußende Papierfasern im Perforationsspalt hin.

Die zuvor erwähnten Vorgabentabellen für $t_{ssoll}$ und $h_{Ssoll}$ können in die Auswerteeinrichtung 4 vor Beginn der Herstellung der Endlosformulare von Hand eingegeben werden; die Auswerteeinrichtung 4 ist dazu vorteilhaft mit einer Eingabeeinheit ausgestattet, die auch eine Anzeige und Änderung der Vorgaben ermöglicht. Die eingegebenen Werte der Vorgabentabelle werden in einer bevorzugten Ausführungsform der Auswerteeinrichtung 4 in einer Speichereinheit abgespeichert, von wo sie auf einfache Weise abgerufen werden können, ohne jedesmal erneut eingegeben werden zu müssen.

Ferner umfaßt die Auswerteeinrichtung 4 in einer vorteilhaften Ausgestaltung eine Speichereinheit zur Abspeicherung der jeweils bestimmten Perforationsfestigkeit und eine Ausgabeeinheit, über die diese Werte oder nur die nicht in einen vorgegebenen Bereich fallenden Werte nach Abschluß der Herstellung eines Endlosformular-Produktionsvolumens ausgegeben werden können.

Die Messung der beiden charakteristischen Größen $h_S$ und $t_S$ kann während der Herstellung der Endlosformulare kontinuierlich und zerstörungsfrei durchgeführt werden, ohne daß die Produktion unterbrochen oder auf eine stichprobenartige Messung zurückgegriffen werden muß. Vielmehr wird jeder einzelne Perforationsspalt erfaßt und auf die erzielte Perforationsfestigkeit hin überprüft, sodaß eine Aussage über die bei der Produktion der Endlosformulare tatsächlich erzielte Perforationsfestigkeit möglich ist.

Durch die erfindungsgemäße Meßvorrichtung kann die Einhaltung von Vorgaben für die Perforationsfestigkeit bereits dadurch beeinflußt und teilweise auch gewährleistet werden, daß aufgrund der Meßergebnisse eine wiederholte Einstellung der Perforationsvorrichtung vorgenommen bzw. eine Nachstellung bei verschleißbedingten Veränderungen durchgeführt wird. Dabei ist aber die Herstellung der Endlosformualre zu unterbrechen bzw. das Ende einer Produktionsvorganges abzuwarten.

Jedoch wird durch die erfindungsgemäße Meßvorrichtung eine Möglichkeit geschaffen die Perforationsfestigkeit von Endlosformularen kontinuierlich zu regeln, da die Messung der Perforationsfestigkeit gemäß der Erfindung kontinuierlich und zerstörungsfrei sowie unter Einbeziehung der Materialeigenschaften des Papiers erfolgt. Die charakteristischen Größen $t_S$ bzw. $b_P$ und $h_S$ können in einen Regelkreis zur Regelung der Perforationsfestigkeit einbezogen werden, wie im folgenden ausführlich beschrieben wird. Auf diese Weise wird eine Perforation erzeugt, die an die Eigenschaften des verwendeten Papiers angepaßt ist.

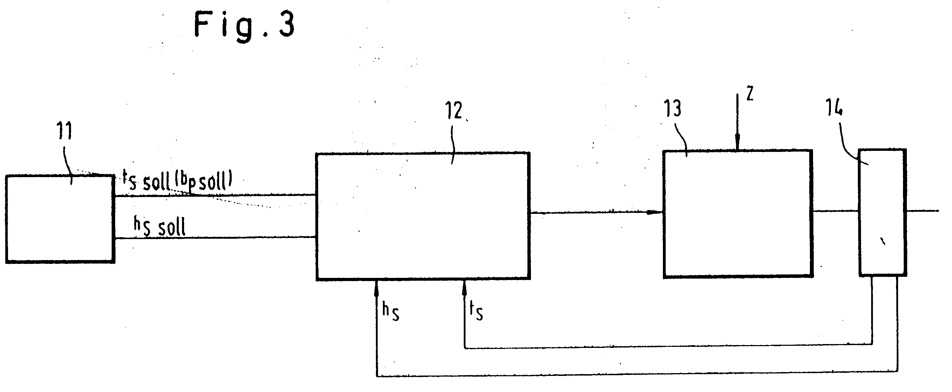

In Fig. 3 ist schematisch ein derartiger Regelkreis dargestellt, dem als Ist-Werte die charakteristischen Größen $t_S$ und $h_S$ zugeführt werden. Der Regelkreis umfaßt eine Sollwertvorgabe 11, über die die Vorgaben für die Signaldauer $t_{Ssoll}$ bzw. die Breite $b_{Psoll}$ und den Signalhub $h_{Ssoll}$ dem Regelkreis zugeführt werden, einen Regler 12, über den Einfluß auf die Einbringung der Perforation ausgeübt wird, und die Regelstrecke 13, auf die neben dem Regler 12 auch Störeinflüsse Z , etwa schwankende Papiereigenschaften einwirken. Hinter der Regelstrecke 13 ist als Ist-Wertgeber 14 die oben beschriebene Meßvorrichtung angeordnet. Die Meßwerte $t_S$ und $h_S$ werden zur Sollwertvorgabe 11 rückgeführt, wodurch der Regelkreis geschlossen wird.

Die Regelstrecke 13 ist herkömmlicherweise eine Perforationsvorrichtung mit Messerwalzen zur Einbringung der Perforation. Der Messerwalze ist ein Gegendruckzylinder achsenparallel zur Messerwalze zugeordnet; der Druck zwischen den beiden beeinflußt maßgeblich die Güte der Durchtrennung des Papiers, d.h. den Signalhub $h_S$ des Meßsignals. Wird als Stellglied eine Vorrichtung zur Veränderung des Drucks zwischen Messerwalze und Gegendruckzylinder vorgesehen und die Veränderung auf der Grundlage der Differenz zwischen Vorgabe $h_{Ssoll}$ und Meßwert $h_S$ durchgeführt, kann der Einfluß von Papierfasern auf die Perforationsfestigkeit vermieden werden. Jedoch sind diesem Vorgehen bei herkömmlichen Perforationsvorrichtungen mit Messerwalzen Grenzen gesetzt, da die mangelnde Durchtrennung der Papierfasern bei herkömmlichen Perforationsverfahren auch auf abgenutzte Perforationsmesser zurückgehen kann. Eine sinnvolle Korrektur ist dann nicht mehr möglich; vielmehr ist ein Austausch der Messerwalze bzw. eine erneute Grundeinstellung der Perforationsvorrichtung erforderlich, wenn der Meßwert $h_S$ zu stark von der Vorgabe abweicht. Mit Hilfe der erfindungsgemäßen Meßvorrichtung kann aber auf einen abgenutzten Zustand der Messer rechtzeitig hingewiesen werden, da die charakteristische Größe $h_S$ kontinuierlich erfaßt wird.

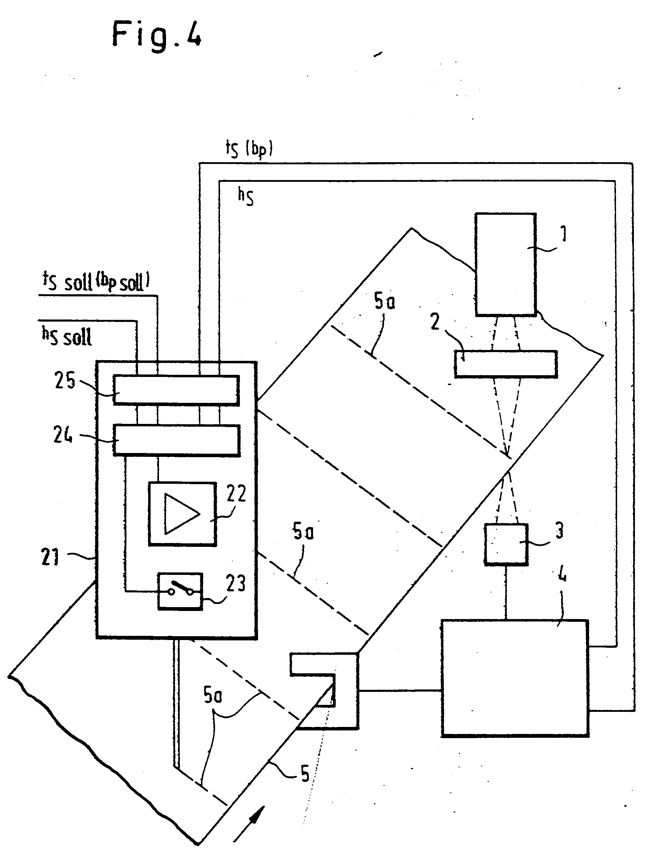

Im folgenden wird ausführlich ein Ausführungsbeispiel einer besonders geeigneten Vorrichtung zur Herstellung von Endlosformularen auf der Grundlage einer Laser-Perforationsvorrichtung unter Bezugnahme auf Fig. 4 beschrieben. In Fig. 4 ist eine Laser-Perforationsvorrichtung gezeigt, die eine Laserlichtquelle 21 umfaßt von der ein das Papier schneidender Laserstrahl ausgeht, der vorzugsweise senkrecht auf die Papierbahn der Endlosformulare 5 auftrifft, um die Perforationsschnitte 5a einzubringen. In der Laserlichtquelle 21 ist eine Einrichtung 22 zur Beeinflussung der von der Laserlichtquelle abgegebenen Leistung vorgesehen. Ferner weist die Laserlichtquelle eine Einrichtung 23 zur Veränderung des Schnitt/Steg-Verhältnisses der Perforation auf. Dabei handelt es sich im einfachsten Fall um eine Schalteinrichtung, die den Laserstrahl entsprechend dem gewünschten Schnitt/Steg-Verhältnis ein- bzw. ausschaltet. Ferner umfaßt die Laserlichtquelle 21 neben einer Regeleinrichtung 24 auch eine Schnittstelle 25, über die die beiden Meßwerte $t_S$ bzw. $b_P$ und $h_S$ zugeführt werden. Über die Schnittstelle 25 werden auch die Vorgaben für die Signaldauer $t_{Ssoll}$ bzw. $b_{Psoll}$ und $h_{Ssoll}$ zugeführt und gelangen zur Regeleinrichtung 24, die auf der Grundlage dieser Werte die Einbringung der Perforation 5a im Hinblick auf eine bestimmte Perforationsfestigkeit regelt.

Einerseits wird die Laserleistung, die von der Laserlichtquelle 21 abgegeben wird, in Abhängigkeit von der Differenz zwischen der Sollwertvorgabe $h_{Ssoll}$ und dem Meßwert $h_S$ bestimmt. Denn eine mangelhafte Durchtrennung der Papierfasern im Perforationsspalt kann durch eine Erhöhung der Laserleistung vermieden werden. Die Einrichtung 22 zur Beeinflussung der Laserleistung wird von der Regeleinrichtung 24 entsprechend angesteuert, um eine verbesserte Durchtrennung der Papierfasern zu bewirken. Dadurch wird erfindungsgemäß die Perforationsfestigkeit in Bezug auf den Einfluß von im Perforationsspalt verbleibender Papierfasern ausgeregelt. Vorteilhaft wird versucht, die Laserleistung so gering wie möglich zu halten.

Eine verbesserte Durchtrennung ist aber auch zu erreichen, wenn die Papierbahn der Endlosformulare 5 exakt in die Brennebene des Laserstrahls gebracht bzw. dort gehalten wird. Da Laser-Perforationsvorrichtungen in der Regel mit einer Fokussiereinrichtung für den Laserstrahl ausgestattet sind, kann ebenso gegebenenfalls eine Nachführung der Fokussierung vorgesehen werden. Sowohl die Veränderung der Laserleistung als auch die Nachführung der Fokussierung sind Maßnahmen, die automatisiert durchgeführt werden können, so daß auf einfache Weise die Perforationsfestigkeit bezüglich der charakteristischen Größe $h_S$, d.h. hinsichtlich der Qualität der Durchtrennung der Papierfasern im Perforationsspalt im Bereich der Vorgabe $h_{Ssoll}$ gehalten werden kann.

Andererseits wird das Schnitt/Steg-Verhältnis der Perforation in Abhängigkeit von der Differenz zwischen der Sollwertvorgabe $t_{Ssoll}$ und dem Meßwert $t_S$ bzw. $b_{Psoll}$ und $b_P$ festgelegt. Dazu wird die Einrichtung 23 zur Veränderung des Schnitt/Steg-Verhältnisses entsprechend derart angesteuert, daß eine zur starke bzw. zu geringe Schwächung des tragenden Papierquerschnitts ausgeglichen wird, der sich durch zu große oder zu kleine Abstände der Flanken des Detektorsignals bemerkbar macht. Denn durch eine geeignete Erhöhung des Schnitt/Steg-Verhältnisses zugunsten des Schnittanteils kann die Perforationsfestigkeit, die aufgrund einer zu geringen Breite $b_P$ des Perforationsspalts als erhöht erkannt wird, auf den gewünschten Wert ausgeregelt werden. Dabei ist zu berücksichtigen, daß sich die Papiereigenschaften innerhalb einer Papierbahn nur sehr langsam verändern so daß Schwankungen der Papiereigenschaften, die zu einer Vergrößerung bzw. Verkleinerung der Perforationsspaltbreite $b_P$ führen, ohne Schwierigkeiten ermittelt und in eine entsprechende Regelung einbezogen werden können. Der langsame Verlauf der Änderungen in den Papiereigenschaften erlaubt eine Bestimmung der Schnitt/Steg-Verhältnisse einer noch einzubringenden Querperforation auf der Grundlage der Messung einer zuvor eingebrachten Querperforation.

Mit Hilfe der anhand von Fig. 4 beschriebenen Vorrichtung können Endlosformulare hergestellt werden, deren Perforation materialangepaßt ist. Durch die Regelung wird erreicht, daß Schwankungen der Papiereigenschaften durch eine entsprechende Anpassung der Perforationsausbildung ausgeglichen werden. Die Perforationsfestigkeit streut daher weniger, als es aufgrund der schwankenden Papiereigenschaften zu erwarten wäre. Dabei stützt sich die Regelung auf eine vollständige und zerstörungsfreie Erfassung der Perforationsfestigkeit und führt zu einer materialangepaßten Perforation der Papierbahn.

Gegenüber dem bisher bekannten Endlosformularen zeichnen sich die Endlosformulare mit materialangepaßter Perforation somit dadurch aus, daß eine Einhaltung der Spezifikation und der damit verbundenen Anforderungen an die Endlosformulare hinsichtlich der Weiterverarbeitung in Bearbeitungsanlagen, wie z.B. EDV-Druckern mit Sicherheit feststeht. Bislang erfolgte für die Erfüllung der an die Endlosformulare gestellten Anforderungen keine auf einer Überprüfung basierende Regelung, so daß nur weite Bereichsgrenzen für die Perforation zuverlässig realisierbar waren. Durch die materialangepaßt perforierten Endlosformulare, bei denen der Variationskoeffizient, d.h. die Abweichung der Perforationsfestigkeit von einem Mittelwert unter einem Grenzwert, vorzugsweise unter 6% liegt, werden erhebliche Vorteile in Hinblick auf deren Zuverlässigkeit und Einsetzbarkeit erreicht.

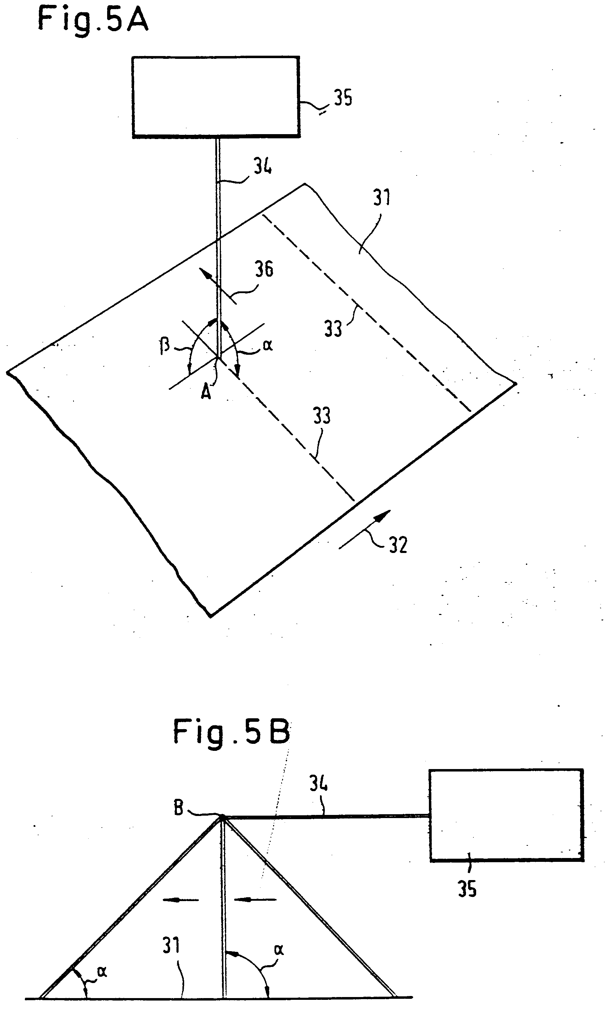

Die Einbringung der Perforation in die Papierbahn mit Hilfe eines Laserstrahls genügt im Hinblick auf einen möglichst geringen Variationskoeffizienten der Perforationsfestigkeit bereits hohen Anforderungen. Dabei hat sich aber gezeigt, daß bei den bisher bekannten Perforationsvorrichtungen mit Laserstrahl Schwankungen auftreten, die eine optimale Ausnutzung des Regelprinzips nicht oder nicht in ausreichendem Maße ermöglichen. Eine Schwierigkeit bei der Herstellung der erfindungsgemäß perforationsgeregelten Endlosformulare entsteht aufgrund der bei herkömmlichen Laser-Perforationsvorrichtungen auftretenden Schrägstellung des Laserstrahls im Randbereich der Papierbahn, der auf die bislang eingesetzten Vorrichtungen und Verfahren zur Ablenkung bzw. Führung des Laserstrahls zurückgeht, wie im folgenden anhand von Fig. 5A und 5B beschrieben wird.

In den Figuren 5A und 5B ist eine Papierbahn 31 dargestellt, die während der Bearbeitung in Richtung des Pfeiles 32 bewegt wird. In die Papierbahn 31 werden durch die Bearbeitung die Perforationen 33 in vorgegebenen Abständen zueinander eingebracht. Die Bearbeitung, d.h. das Einbringen der Perforation 33 erfolgt mit Hilfe eines Laserstrahls 34, der von einer Laserlichtquelle 35 abgegeben wird.

Der Laserstrahl 34 trifft am Auftreffpunkt A auf die Papierbahn 31 und bringt in die Papierbahn den Perforationsschnitt ein. Um beste Schnittergebnisse zu erzielen, steht der Laserstrahl 34 vorzugsweise senkrecht auf der Ebene der Papierbahn 31, so daß sowohl der Winkel alpha als auch der Winkel beta exakt 90° beträgt. Dadurch wird gewährleistet, daß die Schnitttiefe des Laserstrahls 34 im Papier minimal wird. Der Laserstrahl 34 wird in Richtung des Pfeiles 36, d.h. quer zur Bewegungsrichtung 32 der Papierbahn bewegt. Während der gesamten Bewegung des Laserstrahls 34 von einem Rand zum anderen Rand der Papierbahn 31 ist eine völlig gleichmässige Bearbeitung nur zu erreichen, wenn die Winkel alpha und beta unverändert bleiben, d.h. der Laserstrahl 34 während der gesamten Bewegung senkrecht auf der Ebene der Papierbahn 31 steht.

Bei den bekannten Vorrichtungen treten aber die im folgenden unter Bezugnahme auf Fig. 5B beschriebene Probleme auf. Wenn nämlich der Laserstrahl 34, der von der Laserlichtquelle 35 abgegeben wird, am Ablenkpunkt B mit Hilfe von Kipp- oder Polygonspiegeln zur Papierbahn 31 abgelenkt wird, beträgt der Winkel alpha nur in der mittleren Stellung des Laserstrahls exakt 90°. In allen anderen Stellungen ist der Laserstrahl zur Ebene der Papierbahn 31 geneigt, so daß der Winkel alpha vom Wert 90° abweicht. An den beiden Rändern der Papierbahn wird die Abweichung dabei systembedingt am größten. Hinzu kommt, daß sich der Weg, den der Laserstrahl vom Ablenkpunkt B zur Papierbahn 31 zurückzulegen hat, ebenfalls abhängig vom Verlauf des Laserstrahls verändert. Aus diesem Grund muß eine fortlaufende Korrektur der Fokussierung durchgeführt werden, wenn nicht in Kauf genommen wird, daß der Laserstrahl an bestimmten Punkten der Papierbahn 31 unvollständig fokussiert ist. Im Bereich der schräg einfallenden Laserstrahlen, also insbesondere am Rand der Papierbahn 31, durchläuft der Laserstrahl 34 das Papier schräg. Die Schnitttiefe im Papier ist daher länger als im mittleren Bereich der Papierbahn, so daß hier größere Laserleistungen erforderlich sind, um den Perforationsschnitt in das Papier einzubringen. Um ungleichmässige Schnitte zu verhindern, ist die Laserleistung daher an den momentanen Schnittbereich entsprechend anzupassen.

Durch die im folgenden beschriebene Vorrichtung zur Führung des Laserstrahls wird die Schrägstellung des Laserstrahls vermieden und ein stets senkrechter Einfall auf die Ebene der Papierbahn gewährleistet. Dadurch kann eine Vorrichtung zur Herstellung von Endlosformularen realisiert werden, bei der eine materialangepaßte Perforation noch exakter und mit noch geringeren Schwankungen (Variationskoeffizient unter 4%) erzeugt werden kann. Die Schwankungen der Perforationsfestigkeit liegen dann sogar unter den Werten der Schwankungen der Papiereigenschaften, da die Perforation in Abhängigkeit von den Materialeigenschaften eingebracht wird.

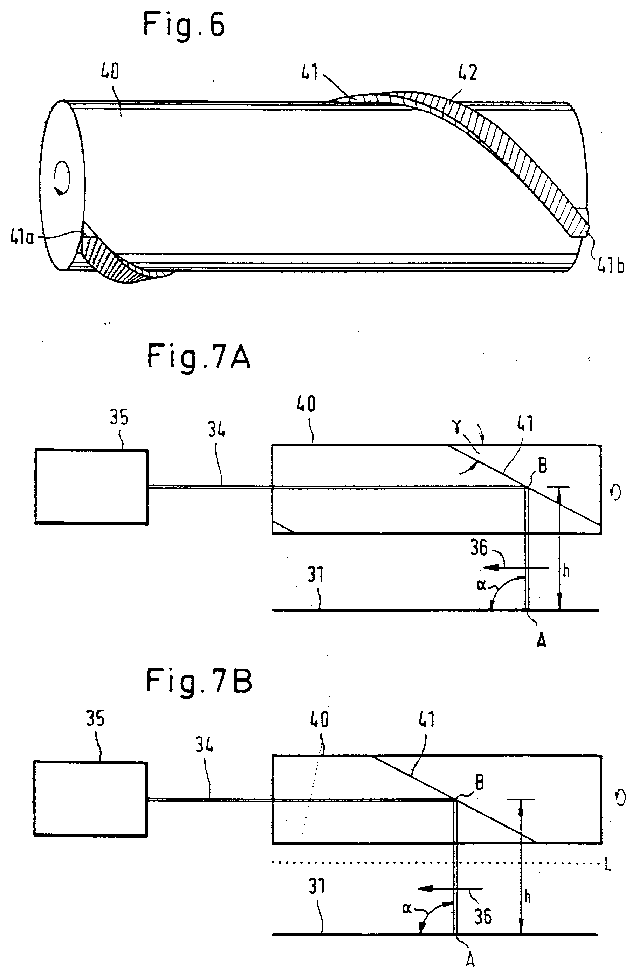

Die Laserstrahl-Führungsvorrichtung ist dazu, wie in Fig. 6 dargestellt, aufgebaut aus einer zylindrischen Trägerwalze 40, auf deren Mantelfläche spiralförmig eine reflektierende Fläche 41 angebracht ist. Die reflektierende Fläche 41 ragt aus der Mantelfläche der Trägerwalze 40 im wesentichen radial heraus und ist bei dem in Fig. 6 dargestellten Ausführungsbeispiel Teil eines Bandes 42, das um die Mantelfläche der zylindrischen Trägerwalze 40 gewickelt und daran befestigt ist. Die reflektierende Fläche 41 ist in der Darstellung der Fig. 6 in einzelne Segmente unterteilt, jedoch dient diese Unterteilung in erster Linie einer Verbesserung der perspektivischen Darstellung der räumlichen Verhältnisse. Im allgemeinen ist die reflektierende Oberfläche 41 des spiralförmig aufgewickelten Bandes 42 kontinuierlich, sofern nicht die beabsichtigte Anwendung eine Segmentierung der reflektierenden Oberfläche erfordert.

Die reflektierende Fläche 41 dient zur Führung bzw. Ablenkung eines im wesentlichen parallel zur Rotationsachse der Walze 40 einfallenden und nahe an der Manteloberfläche verlaufenden Laserstrahls. Rotiert die Walze 40 um ihre Längsachse, wandert der Ablenkpunkt des Laserstrahls entlang der reflektierenden Fläche 41. Der abgelenkte Laserstrahl verschiebt sich entsprechend der Wanderung des einfallenden Laserstrahls auf der reflektierenden Fläche 41 in Abhängigkeit von deren Ausgestaltung. Durch eine geeignete Formung der reflektierenden Fläche 41 kann der einfallende Laserstrahl stets so abgelenkt werden, daß der abgelenkte Laserstrahl sich parallel verschiebt. Ein senkrecht auf die zu bearbeitende Papierbahn einfallender Laserstrahl kann somit mit Hilfe der Laserstrahl-Führungsvorrichtung quer zur Papierbahn bewegt werden, ohne daß die senkrechte Ausrichtung des Laserstrahls zur Ebene der Papierbahn aufgegeben werden muß. Die Ablenkgeschwindigkeit richtet sich im wesentlichen nach der Drehgeschwindigkeit der Trägerwalze 40. Aufgrund der nahezu rotationssymmetrischen Verteilung der Massen kann eine sehr hohe Drehgeschwindigkeit der Walze 40 und daher eine sehr hohe Verschiebegeschwindigkeit des abgelenkten Laserstrahls erreicht werden. Auch die Rückstellung des Laserstrahls erfolgt nahezu ohne Verzögerung da bei einem Übergang des Laserstrahls vom Ende 41a zum Ende 41b der reflektierenden Fläche 41 der Laserstrahl schlagartig zurückgeführt wird.

Im folgenden wird dieser Vorgang anhand der Figuren 7A und 7B weiter verdeutlicht, in denen die Trägerwalze 40 und die reflektierende Fläche 41 nur schematisch dargestellt sind. Fig. 7A zeigt eine erste Drehstellung der Walze 40, die im wesentlichen der Stellung der Walze in der perspektivischen Darstellung der Fig. 6 entspricht. Fig. 7B zeigt eine weitere, fortgeschrittenere Drehstellung der Walze 40. Ferner ist der parallel zur Rotationsachse einfallende Laserstrahl 34 gezeigt, der nahe der Mantelfläche der Trägerwalze 40 verläuft und der von einer Laserlichtquelle 35 abgegeben wird.

Der Laserstrahl 34 trifft jeweils am Ablenkpunkt B auf die reflektierende Fläche 41 und wird von dort in Richtung auf die Papierbahn 31 abgelenkt. Der Winkel gamma, den die reflektierende Fläche 41 in der schematischen Darstellung der Figuren 7A und 7B mit der oberen Mantellinie der Walze 40 einnimmt, beträgt vorzugsweise 45°, insbesondere dann, wenn der Laserstrahl 34 parallel zur Rotationsachse der zylindrischen Walze 40 verläuft. Für diesen Fall gilt für das Verhältnis zwischen der Länge I und dem Durchmesser d der Walze 40 folgende Gleichung:

$$d = \frac{I \cdot \pi}{\sqrt{2}} \qquad (gamma = 45°)$$

Der Laserstrahl 34 wird durch die reflektierende Fläche 41 am Ablenkpunkt B so abgelenkt, daß er im Auftreffpunkt A senkrecht auf die Papierbahn 31 auftrifft. Der Winkel alpha zwischen dem Laserstrahl 34 und der Ebene der Papierbahn 31 beträgt 90°, ebenso wie der nicht dargestellte Winkel beta.

Wird die Trägerwalze 40 um ihre Längsachse gedreht, wie in Fig. 7A und 7B angedeutet, verschiebt sich der Ablenkpunkt B auf der reflektierenden Fläche 41 derart, daß der abgelenkte Laserstrahl und dessen Auftreffpunkt A sich in Richtung des Pfeiles 36 bewegt. Dabei bleibt die senkrechte Strahlführung des abgelenkten Laserstrahls erhalten, so daß der Winkel alpha weiterhin 90° beträgt. Durch eine volle Umdrehung der Walze 40 wird der abgelenkte Laserstrahl parallel von einem Rand zum anderen Rand der Papierbahn 31 verschoben, ohne daß sich der Einfallwinkel alpha ändert. Da somit der Laserstrahl stets senkrecht auf die Papierbahn 31 auftrifft, ist die Schnitttiefe im Papier konstant, so daß die Bearbeitung mit gleichbleibender Laserleistung durchgeführt werden kann und gleichförmige Schnitte erzielt werden.

Ferner bleibt die Weglänge des abgelenkten Laserstrahls konstant, da sie zu jedem Zeitpunkt der Höhe h des Ablenkpunktes B über der Ebene der Papierbahn 31 entspricht. Im einfachsten Fall kann daher zur Fokussierung des Laserstrahls eine halbzylindrisch ausgebildete Sammellinse verwendet werden, die parallel zur Rotationsachse der Trägerwalze 40 so unterhalb davon angebracht ist, daß der abgelenkte Laserstrahl stets hindurchverläuft. In Fig. 7B ist eine mögliche Position der Linse L angedeutet. Aufgrund der gleichmässigen parallelen Verschiebung des abgelenkten Laserstrahls kann die Linse L zur Fokussierung des Laserstrahls den sehr einfachen halbzylindrischen Aufbau besitzen. Ferner können einfach aufgebaute Masken zur Beeinflussung des Laserstrahls ebenfalls im Bereich der Linse L vorgesehen werden.

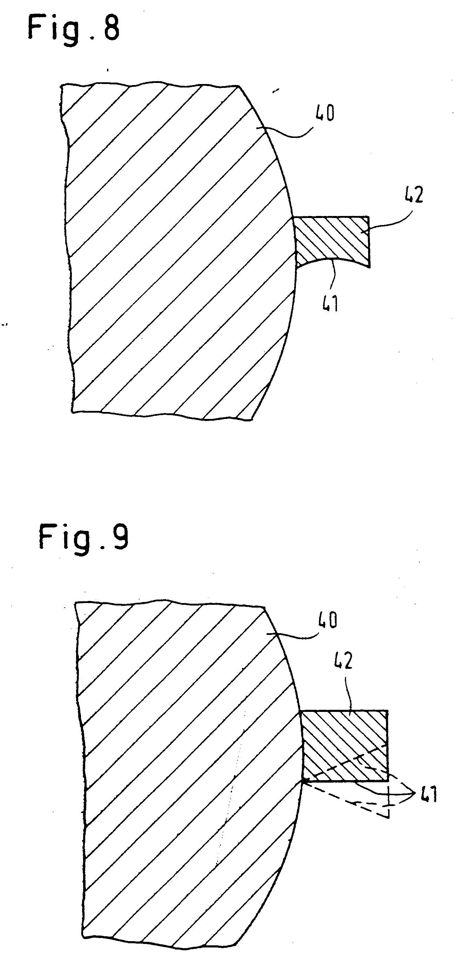

Bei der in Fig. 8 dargestellten Laserstrahl-Führungsvorrichtung wird das Laserlicht ohne Hinzufügen einer Linsenanordnung fokussiert. Denn an der Trägerwalze 40 ist ein Spiralband 42 angebracht, dessen reflektierende Fläche 41 als Hohlspiegel ausgebildet ist. Die gewölbte, reflektierende Fläche 41 bündelt das Laserlicht und fokussiert es auf die Ebene der Papierbahn 31. Die Fokussierung kann gleichbleibend über die gesamte Länge des Spiralbandes 42 oder auch abschnittsweise verschieden ausgebildet sein. Durch diese Anordnung ist eine gute Anpassbarkeit der Fokussierung an die durch die angestrebte Bearbeitung aufgestellten Anforderungen erzielbar.

In Fig. 9 ist eine weitere Ausgestaltung der Laserstrahl-Führungsvorrichtung dargestellt, bei der die reflektierende Fläche 41 nur bereichsweise radial aus der Mantelfläche herausragt. In anderen Bereichen ist die reflektierende Fläche 41 bezogen auf die radiale Ausrichtung geneigt. In Fig. 9 sind drei Stellungen der reflektierenden Fläche 41 gezeigt, von denen die mittlere radial ausgerichtet und zwei dazu geneigt sind. Die Neigung der reflektierenden Fläche 41 ändert sich vorzugsweise kontinuierlich; sie kann aber auch abschnittsweise konstant sein. Die geneigte Anordnung der reflektierenden Fläche 41 führt zu einer Ablenkung des Laserstrahls, die im folgenden genauer beschrieben wird.

Da die zu bearbeitende Papierbahn beim Einbringen der Perforationsschnitte in der Regel nicht stillsteht, sondern vielmehr hohe Bahngeschwindigkeiten in Richtung des Pfeiles 32 in Fig. 5A auftreten, führt eine Laserbearbeitung senkrecht zur Bewegung der Papierbahn selbst bei sehr hohen Schnittgeschwindigkeiten zu schräg verlaufenden Perforationen. Die Schrägstellung der Perforationen kann vermieden werden, wenn der Laserstrahl 34 während der Schnittbearbeitung ebenfalls mit der Bahngeschwindigkeit der Papierbahn in Richtung des Pfeiles 32 bewegt wird.

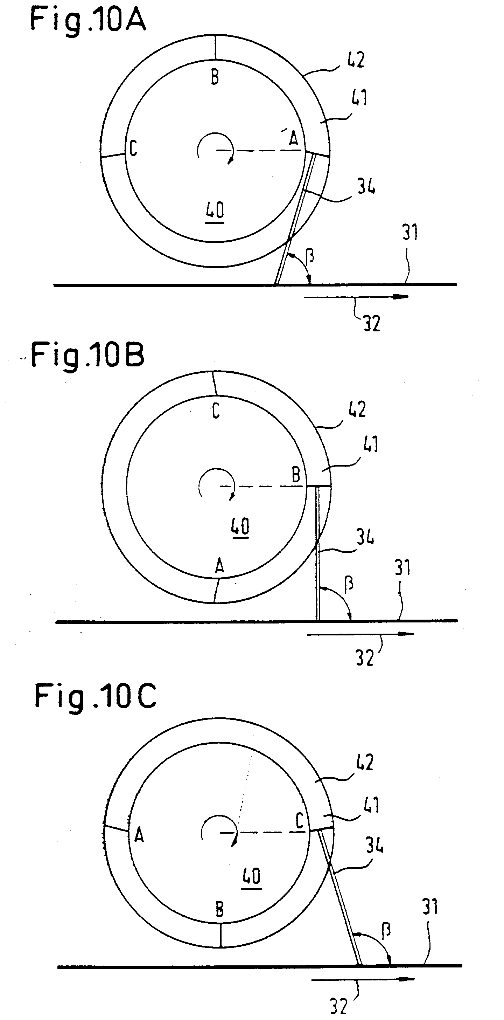

Wie in den Figuren 10A bis 10C dargestellt, kann diese Bewegung des abgelenkten Laserstrahls 34 dadurch erreicht werden, daß die reflektierende Fläche 41 nicht radial zur Manteloberfläche der Trägerwalze 40 verläuft, sondern sich ihre Stellung bezogen auf eine radiale Ausrichtung kontinuierlich ändert. Zur Veranschaulichung dieser Änderung der Stellung der reflektierenden Fläche 41 sind in den Figuren 10A, 10B und 10C jeweils unterschiedliche Drehstellungen der Walze 40 dargestellt.

In Fig. 10A ist die reflektierende Fläche 41 des Spiralbandes 12 derart geneigt, daß der abgelenkte Laserstrahl 34 entgegen der Richtung des Pfeiles 32, d.h. entgegen der Bewegungsrichtung der Papierbahn 31, abgelenkt wird. Der Winkel beta ist kleiner als 90°; sein kleinster Wert sollte 75° aber nicht unterschreiten, da sonst die Schnitttiefe im Papier zu stark ansteigt. Wird die Trägerwalze 40 gedreht, ändert der abgelenkte Laserstrahl 34 kontinuierlich seine Lage und erreicht die Stellung, die in Fig. 10B dargestellt ist. Der abgelenkte Laserstrahl 34 trifft senkrecht auf die Papierbahn 31 auf, d.h. der Winkel beta beträgt 90°. Im weiteren Verlauf der Drehung der Walze 40 ändert sich die Stellung der reflektierenden Fläche 41 kontinuierlich so, daß der abgelenkte Laserstrahl 34 schließlich die in Fig. 10C gezeigte Stellung einnimmt. Der abgelenkte Laserstrahl 34 trifft unter einem Winkel beta auf die Papierbahn 31 auf, der größer als 90° ist. Der maximale Wert des Winkels beta sollte 105° nicht übersteigen, um die Schnitttiefe im Papier nicht zu groß werden zu lassen.

Die Drehgeschwindigkeit und die kontinuierliche Änderung des Winkels der Flächennormalen auf die Längssymmetrielinie der reflektierenden Fläche 41 mit der Papierbahn 31 bestimmen die Geschwindigkeit, mit der sich der abgelenkte Laserstrahl 34 aus der Anfangsstellung, etwa gemäß Fig. 10A, über die senkrechte Stellung, gemäß Fig. 10B, in die Endstellung, etwa gemäß Fig. 10C, bewegt.

Zwar weicht der Winkel beta bei der zuvor beschriebenen Art der Laserstrahlführung von der erwünschten senkrechten Ausrichtung ab und überstreicht einen Bereich von vorzugsweise 75 bis 105°. Jedoch sind diese Änderungen und die damit verbundene Verlängerung der Schnitttiefe im Papier tolerierbar. Denn durch das Vor- bzw. Nacheilen des Laserstrahls, d.h. durch die Anpassung des abgelenkten Laserstrahls an die Bewegung der Papierbahn ist es möglich, die Papierbahn in der Bewegung zu bearbeiten, ohne daß eine Verlangsamung oder ein Anhalten der Papierbahn erforderlich ist.

Neben einer Neigung der reflektierenden Fläche bezogen auf die radiale Ausrichtung kann eine kontinuierliche Fokussierung mit Hilfe einer hohlspiegelartigen Ausbildung der reflektierenden Fläche 41, wie etwa in Fig. 8 dargestellt, durchgeführt werden. Da sich aufgrund der Schrägstellung des abgelenkten Laserstrahls 34 der Abstand zwischen dem Ablenkpunkt B auf der reflektierenden Fläche 41 und dem Auftreffpunkt A auf der Papierbahn 31 kontinuierlich ändert, ist vorteilhaft der Brennpunktabstand der hohlspiegelartig ausgebildeten reflektierenden Fläche 41 geeignet angepaßt, so daß der abgelenkte Laserstrahl 34 stets auf die Papierbahn 31 fokussiert wird.

In einer konkreten Realisierung der Vorrichtung zur Führung eines Laserstrahls wurde eine 500 mm breite Walze mit einem Umfang von 1000 mm angefertigt. An dieser Walze waren zwei Spiralbänder mit einer Höhe und einer Breite von jeweils 10 mm so angebracht, daß der Winkel zwischen dem Spiralband und der Spiegellängsachse 45° betrug. Der Winkel der Flächennormalen auf die Längssymmetrielinie der reflektierenden Fläche des Spiralbandes mit der Papierbahn war variabel zwischen 75 und 105° in Längsrichtung des Zylinders ausgebildet, um durch ein dadurch bewirktes Vor- bzw. Nacheilen des abgelenkten Laserstrahls die Vorschubbewegung des Papiers auszugleichen. Die Brennweite der reflektierenden Fläche auf dem Spiralband betrug 250 mm mit Abweichungen kleiner als 50 $\mu$m. Die Streuung des abgelenkten Laserstrahls in der Brennebene war kleiner als 50 $\mu$m. Trägerwalze und Spiralbänder waren aus 98% reinem Cu ausgeführt.

Bei der Realisierung wurde die Trägerwalze und die Spiralbänder in einem Arbeitsgang aus einem zylindrischen Rohkörper einstückig gefertigt, um ein vollkommen spannungsfreies Anliegen des Spiralbandes an der Walze zu gewährleisten. Beim Einbringen der Perforation mit Hilfe eines Laserstrahls tritt eine nicht unerhebliche thermische Belastung auf, die zu Materialspannungen führt. Um diese so klein wie möglich zu halten, ist eine einstückige Anfertigung von Walze und Spiralband zu bevorzugen. Auf diesem Weg wird eine optimale Wäremableitung aus dem Spiralband in die Walze gewährleistet. Die Wärmeableitung wird ferner durch die Materialwahl unterstützt.

**Patentansprüche**

1. Vorrichtung zur Herstellung von Endlosformularen, bedruckt oder unbedruckt, mit zumindest Querperforationen, die als Abtrenn- und/oder Falzperforation dienen, mit
einer Einrichtung zum Einbringen der Querperforation (5a),
**gekennzeichnet** durch
eine Meßvorrichtung (1, 2, 3) zur Messung der Perforationsfestigkeit der Querperforationen (5a) bei kontinuierlich bewegter Papierbahn,

   - die zu der jeweiligen Spaltbreite der Querperforationen korrelierende Signale erzeugt,

   - die eine Auswerteeinrichtung (4) für den Empfang und die Auswertung der Signale zur Bestimmung der Perforationsfestigkeit umfaßt, und

   - die mit der Einrichtung zum Einbringen der Querperforationen zur Zuführung der Meßergebnisse und zur Beeinflussung des Einbringens der Querperforationen, insbesondere des Schnitt/Steg-Verhältnisses, auf der Grundlage der Meßwerte verbunden ist.

2. Vorrichtung nach Anspruch 1,
dadurch **gekennzeichnet**, daß
die Meßvorrichtung umfaßt:

   eine Lichtquelle (1), vorzugsweise eine Laserlichtquelle zur Abgabe eines Lichtstrahls in Richtung auf die Querperforationen enthaltende Papierbahn (5), und

   eine Detektoreinrichtung (3) zur Erfassung des Lichtstrahls, der an den Stellen der Querperforationen (5a) durch die Papierbahn (5) in Abhängigkeit von deren Bewegung hindurchtritt, und zur Abgabe eines Detektorsignals (S) als ein zu der jeweiligen Spaltbreite der Querperforationen korrelierendes Signal.

3. Vorrichtung nach Anspruch 2,
dadurch **gekennzeichnet**, daß
die Auswerteeinheit (4) ausgestaltet ist zur Auswertung des Detektorsignal (S) von der Detektoreinrichtung (3) im Hinblick auf die Dauer ($t_S$) des Detektorsignals als zur Perforationsfestigkeit korrespondierende Größe.

4. Vorrichtung nach Anspruch 2,
dadurch **gekennzeichnet**, daß
eine Einrichtung zur Erfassung der Bewegungsgeschwindigkeit ($V_E$) der Papierbahn (5) und zur Abgabe eines entsprechenden Signals vorgesehen ist, und
die Auswerteeinrichtung (4) ausgestaltet ist zum Empfang des zur Geschwindigkeit ($V_E$) korrespondierenden Signals und zur Ermittlung auf der Grundlage der Signaldauer ($t_S$) des Detektorsignals (S) der Perforationsspaltbreite ($b_P$) der Querperforationen (5a) als zur Perforationsfestigkeit korrespondierende Größe.

5. Vorrichtung nach einem der Ansprüche 2 bis 4,
dadurch **gekennzeichnet**, daß
die Auswerteeinrichtung (4) ferner ausgestaltet ist zur Ermittlung einer zur Güte der Perforation korrespondierenden Größe ($h_S$).

6. Vorrichtung nach Anspruch 5,
dadurch **gekennzeichnet**, daß
die Auswerteeinrichtung (4) ausgestaltet ist zur Ermittlung des Signalhubs ($h_S$) des Detektorsignals (S) als zur Güte der Perforation korrespondierende Größe.

7. Vorrichtung nach einem der Ansprüche 2 bis 6,
dadurch **gekennzeichnet**, daß
eine optische Einrichtung (2) zur Bündelung des Lichtstrahls vorgesehen ist.

8. Vorrichtung nach Anspruch 7,
dadurch **gekennzeichnet**, daß
die optische Einrichtung (2) den Lichtstrahl derart bündelt, daß der Lichtstrahl den kleinsten Durchmesser in der Ebene der Papierbahn (5) besitzt.

9. Vorrichtung nach einem der Ansprüche 2 bis 8,
dadurch **gekennzeichnet**, daß
der Lichtstrahl vorzugsweise senkrecht auf die Papierbahn (5) auftrifft.

10. Vorrichtung nach einem der Ansprüche 1 bis 9,
dadurch **gekennzeichnet,** daß
die Einrichtung zum Einbringen der Querperforationen eine Messerwalze aufweist.

11. Vorrichtung nach einem der Ansprüche 1 bis 9,
dadurch **gekennzeichnet**, daß
die Einrichtung zum Einbringen der Querperforation eine Laserlichtquelle (21) aufweist.

12. Vorrichtung nach Anspruch 11,
dadurch **gekennzeichnet**, daß
die Laserlichtquelle (21) eine Einrichtung (23) zur Veränderung des Schnitt/Steg-Verhältnisses der einzubringenden Querperforation (5a) aufweist.

13. Vorrichtung nach Anspruch 11 oder 12,
dadurch **gekennzeichnet**, daß
die Laserlichtquelle (21) eine Einrichtung (22) zur Beeinflussung der abgegebenen Laserleistung aufweist.

14. Vorrichtung nach Anspruch 12,
dadurch **gekennzeichnet**, daß
die Laserlichtquelle (21) eine Regeleinrichtung (24) aufweist, die der Grenzwert ($T_{Ssoll}$, $b_{Ssoll}$) für die Perforationsfestigkeit und die Meßwerte der Auswerteeinrichtung (4) zugeführt werden und die die Einrichtung (23) zur Veränderung des Schnitt/Steg-Verhältnisses derart ansteuert.

15. Vorrichtung n ach Anspruch 14,
dadurch **gekennzeichnet**, daß
der REgeleinrichtung (24) ferner der Grenzwert ($h_{Ssoll}$) für die Güte der Perforation zugeführt wird und die Regeleinrichtung (24) die Einrichtung (22) zur Beeinflussung der Laserleistung ansteuert.

16. Vorrichtung nach einem der Ansprüche 11 bis 15,
**gekennzeichnet** durch
eine zylindrische Trägerwalze (40) und zumindest eine reflektierende Fläche (41), die sich auf der Mantelfläche der Trägerwalze (40) entlang einer spiralförmigen Bahn erstreckt und die im wesentlichen radial aus der Mantelfäche der Trägerwalze (40) herausragt.

17. Vorrichtung nach Anspruch 16
dadurch **gekennzeichnet**, daß
die spiralförmige Bahn einen Winkel von 45° mit der Längsachse der Trägerwalze (40) einnimmt.

18. Vorrichtung nach Anspruch 16 oder 17
dadurch **gekennzeichnet**, daß
sich die reflektierende Fläche (41) einmal um die Trägerwalze (40) herum erstreckt.

19. Vorrichtung nach einem der Ansprüche 16 bis 18
dadurch **gekennzeichnet,** daß
die reflektierende Fläche (41) an der einen Stirnseite der Trägerwalze (40) beginnt und an der anderen Stirnseite der Trägerwalze (40) endet.

20. Vorrichtung nach einem der Ansprüche 16 bis 19
dadurch **gekennzeichnet,** daß
die reflektierende Fläche (41) Teil eines spiralförmig angeordneten Bandes (42) ist, das auf der Mantelfläche der Trägerwalze (40) angeordnet ist.

21. Vorrichtung nach einem der Ansprüche 16 bis 19
dadurch **gekennzeichnet,** daß
die reflektierende Fläche (41) einstückig mit der Trägerwalze (40) ausgebildet ist.

22. Vorrichtung nach einem der Ansprüche 16 bis 21
dadurch **gekennzeichnet,** daß
die reflektierende Fläche (41) als Hohlspiegel zur Fokussierung des Laserstrahls ausgebildet ist.

23. Vorrichtung nach einem der Ansprüche 16 bis 22
dadurch **gekennzeichnet,** daß
die reflektierende Fläche (11) bezogen auf die radiale Ausrichtung geneigt ist.

24. Vorrichtung nach Anspruch 23
dadurch **gekennzeichnet,** daß
die Neigung zwischen -25° und +25° beträgt.

25. Vorrichtung nach einem der Ansprüche 16 bis 24
dadurch **gekennzeichnet,** daß
die reflektierende Fläche (41) kontinuierlich ausgebildet ist.

26. Vorrichtung nach einem der Ansprüche 16 bis 24
dadurch **gekennzeichnet,** daß
die reflektierende Fläche (41) segmentiert ausgebildet ist.

27. Vorrichtung nach einem der Ansprüche 16 bis 26
dadurch **gekennzeichnet,** daß
die Trägerwalze (40) in schwingungsgedämpften Nadellagern gelagert ist.

28. Vorrichtung nach einem der Ansprüche 16 bis 27
dadurch **gekennzeichnet,** daß
die Trägerwalze (10) durch ein stufenlos regulierbares Getriebe angetrieben wird.

29. Vorrichtung nach einem der Ansprüche 16 bis 28
**gekennzeichnet** durch
eine Linsenanordnung (L), die im Bereich des abgelenkten Laserstrahls (34) zu dessen Fokussierung angeordnet ist.

**Claims**

1. Device for the production of continuous forms, printed on or not printed on, having at least transverse perforations which serve as a separating and/or folding perforation,

with a device for inserting the transverse perforation (5a),
characterised by
a measuring device (1, 2, 3) for measuring the perforation strength of the transverse perforations (5a) while the paper web is moved continuously,

- which produces signals which correlate with the respective gap width of the transverse perforations,

- which comprises an evaluating device (4) for the reception and the evaluation of signals for the determination of the perforation strength, and
- which is connected to the device for inserting the transverse perforations for the purpose of feeding the measured results and influencing the insertion of the transverse perforations, especially the cut/residual web ratio, on the basis of the measured values.

2. Device according to Claim 1, characterised in that the measuring device comprises:

a light source (1), preferably a laser light source for the delivery of a light beam in the direction towards the paper web (5) containing transverse perforations, and
a detector device (3) for detecting the light beam, which at the locations of the transverse perforations (5a) passes through the paper web (5) as a function of the movement of the latter, and for issuing a detector signal (S) as a signal correlating to the respective gap width of the transverse perforations.

3. Device according to Claim 2, characterised in that

the evaluating unit (4) is designed for the evaluation of the detector signal (S) from the detector device (3) with regard to the duration ($t_S$) of the detector signal as a variable corresponding to the perforation strength.

4. Device according to Claim 2, characterised in that

a device for detecting the speed of movement ($V_E$) of the paper web (5) and for delivering a corresponding signal is provided, and the evaluating device (4) is designed for the reception of the signal corresponding to the speed ($V_E$) and for the determination, on the basis of the signal duration ($t_S$) of the detector signal (S), of the perforation gap width ($b_P$) of the transverse perforations (5a) as a variable corresponding to the perforation strength.

5. Device according to one of the Claims 2 to 4, characterised in that

the evaluation device (4) is further designed for the determination of a variable ($h_S$) corresponding to the quality of the perforation.

6. Device according to Claim 5, characterised in that

the evaluating device (4) is designed for the determination of the signal level swing ($h_S$) of the detector signal (S) as a variable corresponding to the quality of the perforation.

7. Device according to one of the Claims 2 to 6, characterised in that

an optical device (2) for concentrating the light beam is provided.

8. Device according to Claim 7, characterised in that

the optical device (2) concentrates the light beam such that the light beam possesses the smallest diameter in the plane of the paper web (5).

9. Device according to one of the Claims 2 to 8, characterised in that

the light beam preferably encounters the paper web (5) perpendicularly.

10. Device according to one of the Claims 1 to 9, characterised in that

the device for inserting the transverse perforations has a cutter roller.

11. Device according to one of the Claims 1 to 9, characterised in that

the device for inserting the transverse perforations exhibits a laser light source (21).

12. Device according to Claim 11, characterised in that

the laser light source (21) has a device (23) for modifying the cut/residual web ratio of the transverse perforation (5a) to be inserted.

13. Device according to Claim 11 or 12, characterised in that

the laser light source (21) has a device for influencing the laser power delivered.

14. Device according to Claim 12, characterised in that

the laser light source (21) has a control device (24) to which are fed the limiting value ($T_{starget}$, $b_{Starget}$) for the perforation strength and the measured values of the evaluating device (4) and which controls the device (23) for modifying the cut/residual web ratio in this way.

15. Device according to Claim 14, characterised in that

the limiting value ($h_{Starget}$) for the quality of the perforation is further fed to the control device (24) and the control device (24) controls the device (22) for influencing the laser power.

16. Device according to one of the Claims 11 to 15, characterised by

a cylindrical support roller (40) and at least one reflecting surface (41) which extends on the outer surface of the support roller (40) along a helical path and which projects essentially radially from the outer surface of the support roller (40).

17. Device according to Claim 16, characterised in that

the helical path assumes an angle of 45° to the longitudinal axis of the support roller (40).

18. Device according to Claim 16 or 17, characterised in that

the reflecting surface (41) extends once around the support roller (40).

19. Device according to one of the Claims 16 to 18, characterised in that

the reflecting surface (41) begins at one end face of the support roller (40) and ends at the other end face of the support roller (40).

20. Device according to one of the Claims 16 to 19, characterised in that

the reflecting surface (41) is part of a helically arranged strip (42) which is arranged on the outer surface of the support roller (40).

21. Device according to one of the Claims 16 to 19, characterised in that

the reflecting surface (41) is constructed in one piece with the support roller (40).

22. Device according to one of the Claims 16 to 21, characterised in that

the reflecting surface (41) is constructed as a concave mirror for focusing the laser beam.

23. Device according to one of the Claims 16 to 22, characterised in that

the reflecting surface (41) is inclined with respect to the radial orientation.

24. Device according to Claim 23 characterised in that

the inclination amounts to between -25° and +25°.

25. Device according to one of the Claims 16 to 24, characterised in that

the reflecting surface (41) is of a continuous construction.

26. Device according to one of the Claims 16 to 24, characterised in that

the reflecting surface (41) is constructed in segmented manner.

27. Device according to one of the Claims 16 to 26, characterised in that

the support roller (40) is mounted in vibration-damped needle bearings.

28. Device according to one of the Claims 16 to 27, characterised in that

the support roller (40) is driven by a continuously variable drive.

29. Device according to one of the Claims 16 to 28, characterised by

a lens arrangement (L) which is arranged in the region of the deflected laser beam (34) for focusing the latter.

**Revendications**

1. Dispositif pour la fabrication de formulaires en continu, imprimés ou non imprimés, présentant au moins des perforations transversales, qui servent de perforations de séparation et/ou de pliage, et comportant un dispositif pour la réalisation des perforations transversales (5a),
    caractérisé par

un dispositif de mesure (1, 2, 3) destiné à mesurer la résistance de perforation des perforations transversales (5a) sur la bande de papier déplacée continuellement,

- qui produit des signaux en corrélation avec la largeur de fente actuelle des perforations transversales,

- qui comprend un dispositif de traitement de données (4) destiné à recevoir et à exploiter les signaux pour déterminer la résistance de perforation, et
- qui est relié au dispositif destiné à réaliser les perforations transversales, pour y transmettre les résultats de mesure et pour influencer la réalisation des perforations transversales, notamment le rapport coupes/intervalles entre coupes, sur la base des valeurs mesurées.

2. Dispositif selon la revendication 1, caractérisé en ce que le dispositif de mesure comprend :

une source de lumière (1), notamment une source de lumière laser, destinée à émettre un rayon lumineux en direction de la bande de papier (5) renfermant les perforations transversales, et
un dispositif de détecteur (3) pour la détection du rayon lumineux, qui aux endroits des perforations transversales (5a) traverse la bande de papier (5) en fonction de son mouvement, et pour délivrer un signal de détecteur (S) en tant que signal en corrélation avec la largeur de fente actuelle des perforations transversales.

3. Dispositif selon la revendication 2, caractérisé en ce que l'unité de traitement de données (4) est conçue pour traiter le signal de détecteur (S) du dispositif de détecteur (3) dans l'optique de la durée ($t_S$) du signal de détecteur, en guise de grandeur correspondant à la résistance de perforation.

4. Dispositif selon la revendication 2, caractérisé en ce qu'il est prévu un dispositif destiné relever la vitesse de déplacement ($V_E$) de la bande de papier (5), et à délivrer un signal correspondant, et en ce que le dispositif de traitement de données (4) est conçu pour la réception du signal correspondant à la vitesse ($V_E$), et pour la détermination, sur la base de la durée de signal ($t_S$) du signal de détecteur (S), de la largeur de perforation ($b_p$) des perforations transversales (5a), en tant que grandeur correspondant à la résistance de perforation.

5. Dispositif selon l'une des revendications 2 à 4, caractérisé en ce que le dispositif de traitement de données (4) est, par ailleurs, conçu pour la détermination d'une grandeur ($h_S$) correspondant à la qualité de la perforation.

6. Dispositif selon la revendication 5, caractérisé en ce que le dispositif de traitement de données (4) est conçu pour déterminer l'amplitude de signal ($h_S$) du signal de détecteur (S) en guise de grandeur correspondant à la qualité de la perforation.

7. Dispositif selon l'une des revendications 2 à 6, caractérisé en ce qu'il est prévu un dispositif optique (2) pour concentrer le rayon lumineux.

8. Dispositif selon la revendication 7, caractérisé en ce que le dispositif optique (2) concentre le rayon lumineux de manière telle, que le rayon lumineux présente le diamètre le plus petit dans le plan de la bande de papier (5).

9. Dispositif selon l'une des revendications 2 à 8, caractérisé en ce que le rayon lumineux présente une incidence de préférence perpendiculaire à la bande de papier (5).

10. Dispositif selon l'une des revendications 1 à 9, caractérisé en ce que le dispositif destiné à réaliser les perforations transversales comprend un cylindre à couteaux.

11. Dispositif selon l'une des revendications 1 à 9, caractérisé en ce que le dispositif destiné à réaliser la perforation transversale, comprend une source de lumière laser (21).

12. Dispositif selon la revendication 11, caractérisé en ce que la source de lumière laser (21) comprend un dispositif (23) destiné à faire varier le rapport coupes/intervalles entre coupes de la perforation transversale (5a) à réaliser.

13. Dispositif selon la revendication 11 ou 12, caractérisé en ce que la source de lumière laser (21) comprend un dispositif (22) destiné à influencer la puissance du laser émise.

14. Dispositif selon la revendication 12, caractérisé en ce que la source de lumière laser (21) présente un dispositif de réglage (24) auquel sont transmises la valeur limite ($t_{Scons}$, $b_{pcons}$) pour la résistance de perforation et les valeurs de mesure du dispositif de traitement de données (4), et qui commande en conséquence le dispositif (23) pour faire varier le rapport coupes/intervalles entre coupes.

15. Dispositif selon la revendication 14, caractérisé en ce qu'au dispositif de réglage (24) est par ailleurs transmise la valeur limite ($h_{Scons}$) pour la qualité de la perforation, le dispositif de réglage (24) commandant le dispositif (22) pour influencer la puissance du laser.

16. Dispositif selon l'une des revendications 11 à 15, caractérisé par un rouleau porteur (40) cylindrique, et au moins une surface réfléchissante (41), qui s'étend sur la surface périphérique du rouleau porteur (40), le long d'une trajectoire de forme hélicoïdale, et qui fait saillie sensiblement de manière radiale hors de la surface périphérique du rouleau porteur (40).

17. Dispositif selon la revendication 16, caractérisé en ce que la trajectoire de forme hélicoïdale forme un angle de 45° avec l'axe longitudinal du rouleau porteur (40).

18. Dispositif selon la revendication 16 ou 17, caractérisé en ce que la surface réfléchissante (41) s'étend sur un tour autour du rouleau porteur (40).

19. Dispositif selon l'une des revendications 16 à 18, caractérisé en ce que la surface réfléchissante (41) débute au niveau de l'une des faces frontales du rouleau porteur (40) et se termine au niveau de l'autre face frontale du rouleau porteur (40).

20. Dispositif selon l'une des revendications 16 à 19, caractérisé en ce que la surface réfléchissante (41) fait partie d'une bande (42) agencée en forme d'hélice et disposée sur la surface périphérique du rouleau porteur (40).

21. Dispositif selon l'une des revendications 16 à 19, caractérisé en ce que la surface réfléchissante (41) est formée d'un seul tenant avec le rouleau porteur (40).

22. Dispositif selon l'une des revendications 16 à 21, caractérisé en ce que la surface réfléchissante (41) est réalisée sous forme de miroir concave pour focaliser le rayon laser.

23. Dispositif selon l'une des revendications 16 à 22, caractérisé en ce que la surface réfléchissante (41) est inclinée relativement à l'orientation radiale.

24. Dispositif selon la revendication 23, caractérisé en ce que l'inclinaison a une valeur comprise entre -25° et +25°.

25. Dispositif selon l'une des revendications 16 à 24, caractérisé en ce que la surface réfléchissante (41) est de configuration continue.

26. Dispositif selon l'une des revendications 16 à 24, caractérisé en ce que la surface réfléchissante (41) est de configuration segmentée.

27. Dispositif selon l'une des revendications 16 à 26, caractérisé en ce que le rouleau porteur (40) est monté dans des roulements à aiguilles à amortissement des vibrations.

28. Dispositif selon l'une des revendications 16 à 27, caractérisé en ce que le rouleau porteur (40) est entraîné par une transmission réglable en continu.

29. Dispositif selon l'une des revendications 16 à 28, caractérisé par un agencement de lentilles (L), qui est disposé dans la zone du rayon laser (34) dévié, en vue de le focaliser.

# Fig.1

# Fig.2A

# Fig.2B

# Fig.2C

Fig.3

EP 0 536 685 B1

# Fig.4

## Fig.5A

## Fig.5B

# Fig.6

# Fig.7A

# Fig.7B

Fig.8

Fig.9

# Fig.10A

# Fig.10B

# Fig.10C